# EUROPEAN PATENT SPECIFICATION

(11) **EP 3 311 280 B1**
(45) Date of publication and mention of the grant of the patent: **27.03.2019**
(21) Application number: 15751003.3
(22) Date of filing: 14.08.2015
(51) Int. Cl.: G06F 12/1072, G06F 3/06, G06F 11/20, G06F 17/30

(54) **DATA REPLICATION IN MEMORY SYSTEMS.**
DATENREPLIKATION IN SPEICHERSYSTEMEN
RÉPLICATION DE DONNÉES DANS DES SYSTÈMES DE MÉMOIRE

(43) Date of publication of application: 25.04.2018
(73) Proprietor: Hewlett Packard Enterprise Development LP, Houston, TX 77070 (US)
(72) Inventor: VAQUERO GONZALEZ, Luis Miguel, Stoke Gifford Bristol BS34 8QZ (GB); SAE LOR, Suksant, Stoke Gifford Bristol BS34 8QZ (GB)
(74) Representative: ZBM Patents - Zea, Barlocci & Markvardsen
(86) International application number: PCT/EP2015/068792
(87) International publication number: WO 2017/028885

(56) References cited:
- US-A1- 2014 025 770
- US-A1- 2014 351 536
- BAYLOR S ET AL: "Lazy home migration for distributed shared memory systems", HIGH-PERFORMANCE COMPUTING, 1997. PROCEEDINGS. FOURTH INTERNATIONAL CO NFERENCE ON BANGALORE, INDIA 18-21 DEC. 1997, LOS ALAMITOS, CA, USA,IEEE COMPUT. SOC, US, 18 December 1997 (1997-12-18), pages 106-111, XP010255680, DOI: 10.1109/HIPC.1997.634479 ISBN: 978-0-8186-8067-0

## Description

### BACKGROUND

In the field of computing, data used by processors or other computing components may be held in memory devices and systems for time periods of different durations. Memory devices and systems that hold data in a transient manner are often referred to as "caches" or "memories", whereas memory devices and systems that hold data in a persistent manner are often referred to as "storage". Conventional memory systems involve a hierarchical arrangement of short-term and long-term memory devices. US2014025770 A1 discloses integrating end-host and network resources in distributed memory.

In the present document the expressions "memory" and "storage", and expressions derived from the verbs "to store" and "to hold", may be used in an interchangeable manner and, absent additional qualification, do not connote any particular degree of persistence or transience in the retention of the data (e.g. they do not signify the use of any particular technology out of volatile and non-volatile technology).

### BRIEF DESCRIPTION OF THE DRAWINGS

The following detailed description refers to the accompanying drawings. Wherever possible, the same reference numbers are used in the drawings and the following description to refer to the same or similar parts. It is to be expressly understood, however, that the drawings are for the purpose of illustration and description only. The invention is set out in the appended independent claims . Advantageous embodiments are defined by the appended dependent claims. The embodiments or examples of the following description which are not covered by the appended claims are considered as not being part of the invention according to this description.
Figure 1(a) is a diagram representing a memory system according to a particular example of the present disclosure, and Figure 1(b) illustrates how the memory system of Fig.1(a) appears to a component seeking to read/write data in the memory system.
Figure 2 is a diagram representing a memory system according to another particular example of the present disclosure according to another particular example of the present disclosure.
Figure 3 is a flow diagram illustrating an example method of performing data replication in a memory system.
Figure 4 is a diagram representing an example of a memory component that may be used in the memory system of Fig.2.
Figure 5(a) is a diagram representing an example of an update synchronisation manager that may be used in the memory system of Fig.2, and Figure 5(b) is an example of a transmission unit that may be used in the update synchronisation manager of Fig.5(a).
Figure 6 is a diagram representing an example of a memory component that may be used in the memory system of Fig.2.
Figure 7 is a diagram representing another example of a memory system.
Figure 8 is a diagram representing an example of a data-refresh unit that may be used in the memory system of Fig.7.
Figure 9 is a diagram representing an example of a memory component that may be used in the memory system of Fig.7.
Figure 10 is a diagram representing a region in an example memory system.

### DETAILED DESCRIPTION

Memory systems are being developed which comprise a plurality of logically connected memory units whose individual memory address spaces are aggregated and exposed (e.g. to processors/computing modules) - through entry points acting similarly to gateways in computer networks - as if the whole network of memory units was but a single memory component having a uniform memory space. Such memory systems are called "memory fabrics" in the present document.

These memory fabrics treat memory as if it were a routable resource (treating memory addresses somewhat in the way that IP networks handle IP addresses). The memory fabric handles memory traffic, that is, the items routed over the memory fabric and such items may comprise: memory access requests and other relevant messages/information to facilitate access, allocation, configuration and the like of the memory fabric, as well as data being read from/written to memory.

It is a challenge to implement data replication in a memory system that is a memory fabric of routable memory units.

Data replication is a technique that is used in the field of database management. Data replication involves creating multiple instances of the same data object, and keeping the various instances of the data object synchronized even when updates take place. As a result, even if one instance of the data object is corrupted, unavailable or distant, a computing component may nevertheless easily be able to access the data object by accessing one of the other instances of the same data object. In general, the expression "replica" is used for all the instances of the same data object (so, for example if there are m instances of the data object each of the m instances is called a "replica"). The same usage is employed in the present document.

Different approaches have been proposed for the management of data replication. One approach used with databases is so-called "eager" replication which synchronizes all the instances of a data object as part of the same database transaction. However, conventional eager replication protocols have significant drawbacks regarding performance and scalability, which are due to the high communication overhead among the replicas and the high probability of deadlocks. Some newer eager replication protocols try to reduce these drawbacks by using group communication.

Another approach used with databases is so-called "lazy" replication management. Lazy data replication decouples replica maintenance from the "original" database transaction. In other words, a first database transaction updates one of the instances, and then other transactions, that are required in order to keep all the replicas up-to-date and consistent, run as separate and independent database transactions after the "original" transaction has committed. A drawback of lazy replication techniques is that at a given moment certain replicas of a data object may have been updated but other replicas of the same data object may not yet have been updated (i.e. the replicas of the data object are not synchronized with each other).

So, both the eager and the lazy data replication techniques that have been proposed for databases have some advantages, but also various drawbacks.

Some techniques have been proposed to implement data replication in certain types of memory device and systems. (In general, the data replication techniques proposed for memory devices and systems are not the techniques known from work with databases in view of the fact that the latter techniques tend to operate at a coarse level of granularity, that is, the replicated data objects are large complex structures (often full database tables)).

For example, data replication techniques of both types (lazy and eager) have been proposed for use in centralized memory management systems.

As another example, in the case of a memory device built using phase change memory technology, in which individual bits in the memory can fail, it has been proposed that a page of memory that has flawed bits could nevertheless still be used for data storage if a backup of the same page of data is stored in a second page of memory that has pristine bits at the locations where the first page of memory has flawed bits.

As such, a technical challenge exists to implement data replication in memory fabrics, that is, in memory systems that comprise logically-connected, routable memory components whose individual address spaces are aggregated and exposed as a single memory component, to processing components and so forth that seek to read/write data in the memory system.

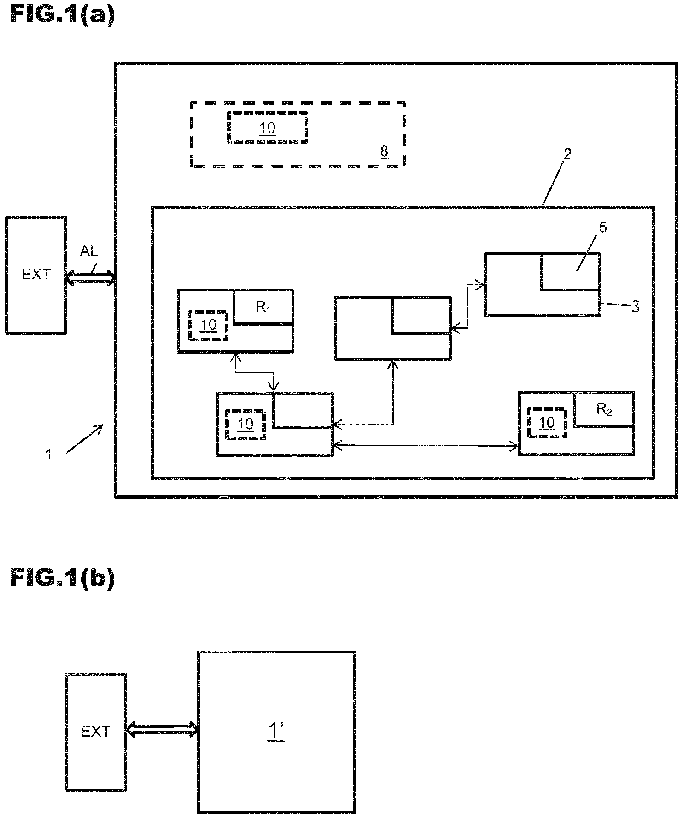

Figs.1(a) and (b) illustrate an example memory system 1 according to the present disclosure.

According to the example of Figs.1(a) and (b), the memory system 1 comprises a network 2 of connected memory components 3. The present disclosure is not limited having regard to the topology of the network 2; the memory components 3 may be inter-connected in different topologies. Further, the memory components may be distributed in physical space in any desired manner; for example, the different memory components may be co-located and/or distributed to different locations, for example with some memory components being located close to computing systems (processors, cores) and some other memory components being located at remote locations remote from the processing nodes.

Similarly, the present disclosure is not limited having regard to the nature of the connections between the memory components 3; the connections between the memory components may be realized using different technologies including, but not limited to, optical interconnects, wireless connections, wired connections, and so forth. The connections in the network 2 may be of the same type or a mixture of different types. In a particular example implementation at least some of the memory components 3 are interconnected by high-throughput, low latency optical interconnects.

Each memory component 3 has capacity to hold data and so defines an individual memory-address space 5. The data-holding capacity of a given memory component 3 may be realized using one, two, or any desired number of constituent memory units (not shown in Figs.1(a) and (b)), as explained below. The present disclosure is not limited having regard to the technology used for holding data; different technologies may be used including, but not limited to volatile memory technologies, non-volatile storage technologies, memristors, and so forth. Within the memory system 1 the data-holding technologies may be of the same type of a mixture of different types.

The memory system 1 may comprise one or several additional components 8 that do not contribute to the memory space provided by the memory system 1, but which cooperate with the memory components 3 to facilitate set-up and/or operation of the memory system 1. One additional component 8 is illustrated in Fig.1(a) (in broken lines to indicate its optional nature).

According to the example of Figs.1(a) and (b), the memory components comprise logically-connected, routable memory components whose individual memory-address spaces are aggregated and exposed - to a number of processing components Ext external to the memory system 1 - as a single memory component 1'. In other words, from the point of view of the processing component(s) Ext seeking to read/write data in the memory system it is as if their read/write requests relate to memory addresses of a single memory component 1' (as represented schematically in Fig.1(b)). To simplify, Figs.1(a) and (b) only illustrate one external component Ext but the present disclosure is not limited having regard to the number of processing nodes that may be connected to the memory system 1. Thus, for example, the memory system 1 may be a shared memory used by plural processing nodes.

The nature of the processing components Ext is not particularly limited; as a non-limiting example they may comprise processor cores, computing devices, and so forth. Although the processing components Ext are represented in Figs.1(a) and 1(b) as wholly outside the network 2 of memory components 3, and connected to that network 2 by additional links AL, it is to be understood that the scope of the present disclosure extends to configurations in which the processing components Ext and memory components 3 form part of a common network arrangement, for example as illustrated in the applicant's co-pending patent application WO2014/178854.

The memory system 1 may be configured to allow memory components to join and leave the network 2. Protocols may be provided to perform the appropriate configuration of the memory system when memory components join or leave the network 2. For example, there may be a protocol that operates when a memory component joins/leaves the network and adjusts the configuration of the memory address space that is exposed to external components Ext. Such a protocol may be implemented in various ways including, but not limited to: a peer-to-peer approach (implemented by peers provided in the memory components, as described in a co-pending patent application filed by the applicant), or an approach that uses centralized management to configure the memory space.

According to a particular implementation example, the memory system 1 comprises memory components 3 that provide persistent storage of data, for example, using non-volatile memory units, battery-backed volatile memory units, and so forth. In a specific implementation example such a memory system uses high-throughput, low latency optical interconnects. In this example implementation the memory system may serve as a non-hierarchical memory resource providing both short-term and long-term holding of data (i.e. acting somewhat like a massive DRAM that replaces all other memory needed to store data persistently (like non-volatile memory), or cache data (like DRAM)). Such an implementation flattens the memory hierarchy and removes the conventional differentiation between "disk" and "storage", enabling processing nodes that use the memory system to employ simplified operating systems, giving faster access to data and reducing energy consumption.

Various protocols are implemented in the memory system 1 of Figs.1(a) and (b), for example in order: to handle interactions between the memory components and external components Ext that seek to read/write data in the memory system 1, to configure the address space (particularly in cases where memory components may join/leave the network 2), and so forth. Elements in the memory components 3 may cooperate to implement such protocols and/or one or plural additional components 8 may be provided in the memory system to enable implementation of the protocols. Protocols dealing with functions such as configuration and addressing of the memory system 1 are outside the scope of the present disclosure (various example protocols and systems are described in co-pending applications filed by the applicant). However, the present disclosure relates to implementation of a data replication protocol in memory systems.

In the example of Figs.1(a) and 1(b), the memory system 1 is configured to perform a data replication protocol, that is, a protocol according to which the memory system 1 holds replicated data objects in n replicas, one of the n replicas of a data object being a primary replica, the other replicas of the same data object being secondary replicas. The number n of replicas may be any positive integer equal to or greater than 2. The number of replicas n need not be the same for all data objects. Thus, for example, the data replication protocol may allow different numbers of replicas to be created for data objects based on factors including, but not limited to; a rule, a configurable parameter associated with the data object, and a class of the data object. In the example of Figs.1(a) and 1(b), two replicas R₁ and R₂ of a data object are stored in respective different memory components of the memory system 1.

In example memory systems according to the present disclosure a data "object" may be defined at various levels of granularity and may be written in the memory system 1 at a configurable number of memory positions: for example, a data object may correspond to a file held in a distributed manner over a set of memory addresses in the memory system 1, it may correspond to data written at a single memory position, and so on. In a specific implementation of the memory system the memory space is byte-addressable.

Memory systems according to the present disclosure perform data replication by implementing lazy data replication protocols in which replicas of a same data object are updated in individual transactions (not as part of the same transaction). In the memory system 1 according to the example of Figs.1(a) and (b), hardware, firmware and/or software elements 10 that contribute to implementation of a lazy data replication protocol memory may be provided in some or all of the memory components 3 of the memory system. Hardware, firmware and/or software elements 10 that contribute to implementation of a lazy data replication protocol memory may be provided in one or some additional components 8 associated with the network of memory components.

The above-mentioned hardware, firmware or software 10 may include one or both of a processor and a machine-readable storage medium storing programming instructions or code executable by the processor to perform operations of the lazy data replication protocol. The above-mentioned hardware, firmware or software may include an application specific integrated circuit (ASIC) constructed to perform operations of the lazy data replication protocol.

Because the memory system 1 includes elements that cooperate to implement a lazy data replication protocol, an update of a first replica of a data object is decoupled from transactions which make the same update to other replicas of the same data object.

In the present document references to "updates" of a replica covers both the first time that a particular data object dj is written to the memory system and occasions when a change is to be made in a data object that is already held in the memory system. Further, in the present document references to "updates" of a replica cover the case where there is to be a rewrite of data defining the replica held at a particular memory address, and the case where each updated value/state of a replica is stored in the memory system in a separate memory address (such that all the successive values/states of the corresponding data object are stored in the memory system).

In the context of memory system 1 which comprises a network of memory components 3, the implementation of a lazy data replication protocol means that the updating of a replica of a data object may be completed (the update transaction may be executed) without needing to wait for news of the update transaction to propagate to all the other memory components that hold another replica of the same data object. This time-saving may have a significant impact on operation in the context where the memory system 1 comprises a physically-extended memory network in which there is a relatively significant distance between different memory components of the network 2 (e.g. the network of memory components extends over plural racks of a data centre, over plural data centres, and so forth). Thus, memory systems according to the present example have good scalability properties.

However, another challenge arises when a lazy data replication protocol is implemented in a memory system comprising a network of connected memory components, because the different replicas of a same data object held in the memory system can become unsynchronized, that is, at a given moment there may be replicas which have undergone the latest update and other replicas which have not yet undergone the latest update or, indeed, have not undergone a series of updates, or have been subjected to a series of updates implemented in the wrong order resulting in differences between this replica and other replicas of the same data object.

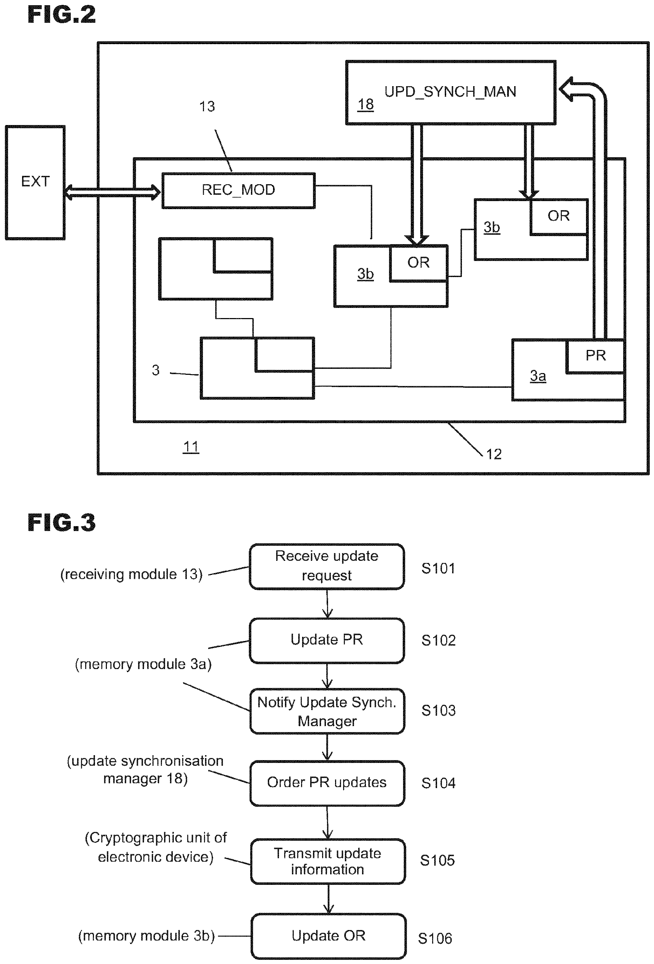

Fig.2 illustrates a memory system 11 comprising a network 12 of logically-connected routable memory components 3 whose memory spaces 5 are aggregated and exposed to external components EXT as if the whole memory system 1 were but a single memory component. The memory system 11 of Fig.2 comprises a receiving module 13 to receive requests to update data objects in the memory system 11; and an update-synchronization manager 18. Plural receiving modules 13 may be provided in the memory system 1. The receiving module 13 may be configured to implement a routing protocol to route requests and/or messages to appropriate memory components in the network 12.

The receiving module 13 shown in Fig.2 may be a memory component 3 of the network 12 or a module within a memory component 3 (for example a router module as described below). Specific router modules/memory components functioning as receiving modules 13 may be designated as entry points, operating in a manner similar to gateways in IP networks. The present disclosure is not limited having regard to the specific routing mechanisms that are employed to direct requests and/or messages through the network 12.

The memory system 11 is configured to implement a data-replication protocol in which for data objects written to the memory system, a primary replica PR of the respective data object is written in a first memory component 3a and each of a selected number of other replicas OR of the data object is written in a respective second memory component 3b. Fig.2 illustrates the case in which three replicas of a data object are held in the memory system 11.

An example method implementing a lazy data replication protocol in the memory system 12 of Fig.2 will now be described with reference to the flow diagram of Fig.3.

In the data-replication implementation method illustrated in Fig.3, an update request is received (S101) seeking to update a data object. The "update" may be the first write of any replica of the data object in the memory system 11 or it may be an update relating to a data object already having replicas written in the memory system 11. Any routing of the received update request that may be required is performed so that the update request is transmitted to a first memory component 3a in whose memory space a primary replica PR of the data object is already written/will be written. The update request may include a parameter indicating the number of replicas of the data object.

The first memory component 3a updates the primary replica PR of the relevant data object (S102) in response to the update request, and notifies the update-synchronization manager 18 that the respective update has been implemented on the primary replica (S103). The first memory component 3a may use various techniques for generation of the update notification to be sent to the update synchronisation manager 18. For example, the first memory component 3a may relay to the update synchronisation manager 18 each update request it receives, performing the relaying when the relevant update transaction has been executed on the primary replica.

The update-synchronization manager 18 orders the updates relating to the primary replica PR, in the order that these updates were implemented on the primary replica PR (S104). This ordering may be achieved in various ways. As a non-limiting example, this ordering may be achieved by putting the update notifications received from the first memory component 3a into a first-in first-out register (FIFO). The update-synchronization manager 18 transmits, to the second memory component(s) 3b of the memory system, update instructions corresponding to the respective updates that have been implemented on the primary replica PR (S105). The transmitted update instructions are ordered according to the order of implementation of the respective updates on the primary replica PR. The update synchronization manager 18 may use various techniques for ordering the transmitted update instructions. As a non-limiting example, in the case where the update synchronization manager 18 has loaded received update notifications into a FIFO, the update synchronization manager 18 may transmit the update notifications, as update instructions, by reading them out of the FIFO. Of course other techniques may be used, for example, the update synchronization manager 18 may order updates by assigning sequence numbers or time stamps to the updates indicated in update notifications it receives and then transmit update instructions labelled using the sequence numbers/time stamps.

In response to receiving update instructions transmitted by the update synchronization manager 18, the second memory components update other replicas OR of the data object in the same order that updates were implemented on the primary replica (S106). This updating of the other replicas OR may consist in a first-time write of the other replicas, or an overwrite.

In the example lazy data replication method according to Fig.3, updates of a data object first occur at a first memory component 3a holding the primary replica PR of that data object, and only afterwards are these updates propagated to each second memory component 3b holding other replicas of the same data object. As a consequence, all write operations to the same data object can be ordered according to the order of their execution at the first memory component holding the primary replica PR. By notifying to a centralized point (the update synchronization manager 18) the updates executed at the first memory component 3a, and ordering these updates before propagating corresponding update instructions to the second memory components 3b holding the other replicas OR, it can be assured that update operations on all the replicas of a given data object will be properly synchronized. It will be understood that this example data replication method combines the advantages of lazy and eager data replication approaches.

In Fig.2 the update synchronization manager 18 is illustrated as receiving transmissions only from one first memory component 3a in which a primary replica PR of a given data object is written, and as making transmissions only to two second memory components 3b in which the other replicas OR of the same data object are written (or are to be written). However, it is to be understood that the update synchronization manager 18 may receive update notifications from plural first memory components in the memory system 11 in which primary replicas of different data objects are written, and may transmit update instructions to plural second memory components in the memory system in which other replicas (not being primary replicas) of different data objects are written. Moreover, in certain examples of the present disclosure a same memory component may hold primary replicas of certain data objects and other replicas OR of other data objects.

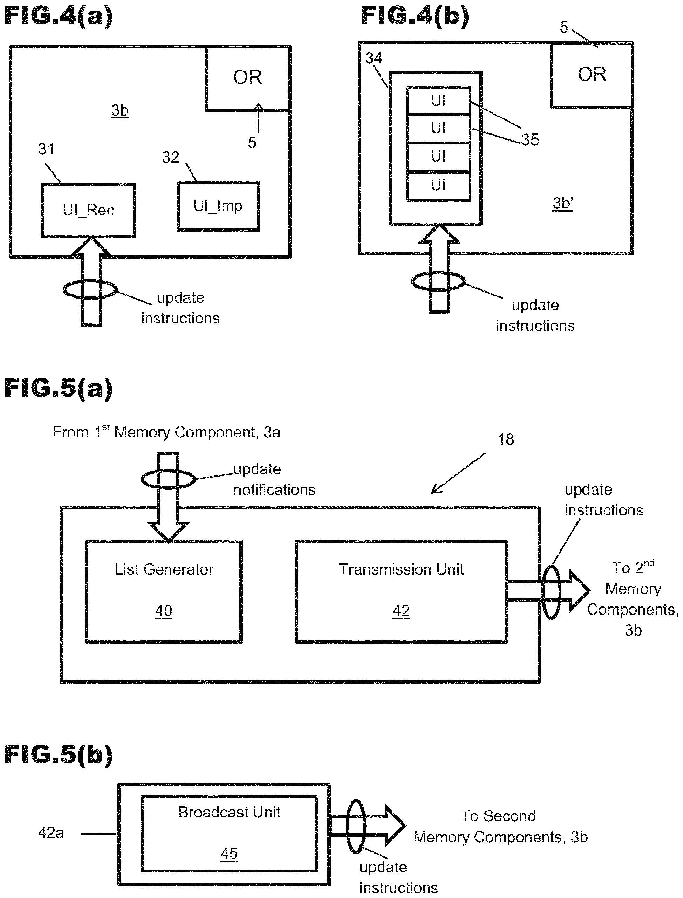

Figs.4(a) and (b) are diagrams representing examples of respective second memory components 3b, 3b' that may be used in the memory system of Fig.2.

As illustrated in Fig.4(a), the second memory component 3b comprises a memory module (implementing memory space 5) to hold a replica OR of a data object whose primary replica is held in another memory component 3a of the memory system 12, a receiving unit 31 to receive update instructions from the update-synchronization manager 18, directing updating of the replica OP held in the memory module 5 and an update-implementation unit 32 to implement received update instructions in the same order as the updates were implemented on the primary replica PR.

As illustrated in Fig.4(b), the second memory component 3b' comprises a memory module (implementing memory space 5) to hold a replica OR of a data object whose primary replica is held in another memory component 3a of the memory system 12, and a queueing unit 34 to form a queue of update instructions 35 received from the update-synchronization manager 18. The queueing unit 34 orders the update instructions 35 in the queue in the order of implementation of the corresponding update on the primary replica PR. The queueing unit 34 may use various techniques to arrange the update instructions in the appropriate order, for example: based on time stamps, sequence numbers, order-of-receipt from the update synchronization manager 18 (if it may be assumed that the transmission from the update synchronization manager is reliable and update instructions are received by all second memory components in the order they have been transmitted by the update synchronization manager), and so forth.

Typically, the queueing unit 34 of a given second memory component 3b' generates a local queue that may hold update instructions relating to replicas of different data objects, where those replicas are all written in the memory space of this second memory component 3b'. However, the queueing unit 34 may be configured to generate individual queues for the update instructions relating to replicas of different data objects.

The second memory components may implement transactions to apply updates from the relevant queue to replicas OR written in their respective memory spaces. The present disclosure is not limited having regard to the timing of implementation of these transactions. However, in a specific implementation of the second memory components, update instructions from the queue may be applied to replicas in the memory space 5 of the respective second memory component during idle times when no data-read or data-refresh transaction is being performed by this memory component (see below). By exploiting these idle times, the synchronization of replicas OR with their relevant primary replica PR does not interfere with (i.e. slow down) data-read or data-refresh operations in the memory system.

Figure 5(a) is a diagram representing an example of an update synchronisation manager that may be used in the memory system of Fig.2. The example update synchronization manager 18 of Fig.5(a) comprises a list generator 42 to list notifications of updates of a primary replica PR in the order of implementation of the updates on that primary replica and a transmission unit 42 to transmit update instructions to the second memory components 3b.

The list generator 40 may generate a global list (or global log) formed based on update notifications transmitted by some or all of the first memory components 3a in the memory system 11. Within the global list the details of the updates relating to a primary replica PR of a particular data object are ordered according to the order of implementation of updates on that primary replica PR. However, the present disclosure is not limited to the foregoing case. Thus, for example, the list generator may generate individual lists relating to the updating of primary replicas of different data objects.

Figure 5(b) is an example of a transmission unit 42a that may be used in the update synchronisation manager of Fig.5(a). The transmission unit 42a of Fig.5(b) comprises a broadcast unit 45 to broadcast update instructions to the second memory components. The broadcast unit 45 may identify the data object concerned by a given update instruction, for example by including a data-object-identifier in the broadcast data, in association with the relevant update instruction. However, the present disclosure is not limited to the case where a data-object-identifier is transmitted with the broadcast data; other approaches may be used (including but not limited to identifying a memory location where the other replica OR of the relevant data object is held).

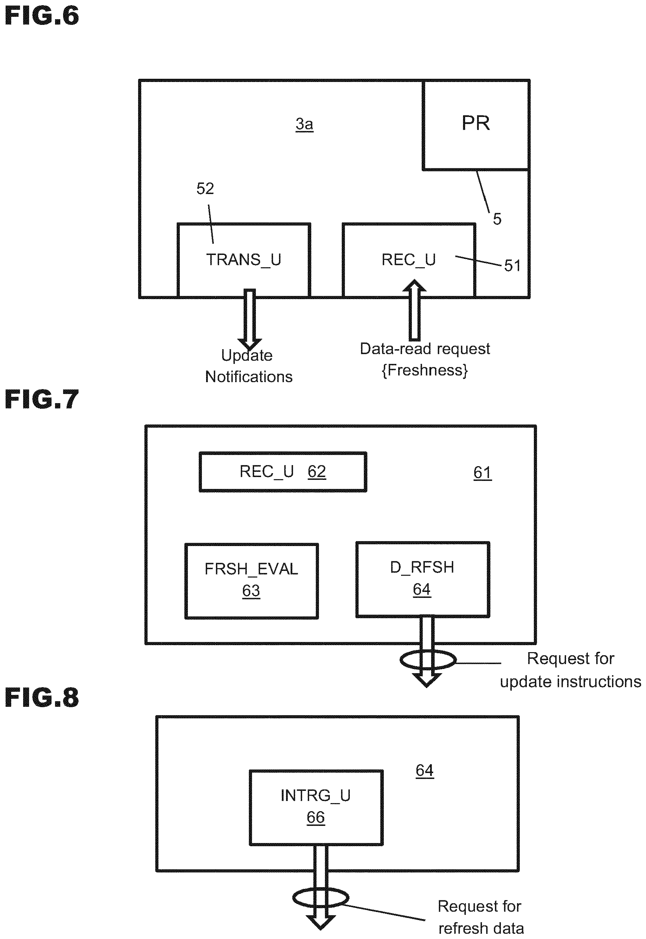

Figure 6 is diagram representing an example of a first memory component 3a that may be used in the memory system 11 of Fig.2.

The example first memory component 3a of Fig.6 comprises a memory module (implementing the memory space 5) to hold the primary replica PR of a data object; a receiving unit 51 to receive update requests requesting updating of the primary replica of the data object, and a transmitting unit 52 to transmit update notifications to the update-synchronization manager 18 upon completion of respective update transactions on the primary replica PR.

Figure 7 is a diagram representing another example memory system 61 according to the present disclosure. The memory system 61 may include memory components 3 and an update synchronization manager 18 as in the memory system of Fig.2 but such elements are not represented in Fig.6.

The memory system 61 comprises a receiving module 62 to receive data-read requests, for example from an external device EXT. The received data-read requests may include a parameter specifying a freshness-requirement for the data-object to be read. For example, the data-read request may identify the desired "freshness" of the data object in terms of a time stamp, a sequence number, and so on. The memory system 61 may handle the data-read request in a read transaction that reads a replica of the relevant data object. In certain implementations, the memory system 61 does not implement read transactions on primary replicas written in first memory components 3a. This approach reduces the workload on first memory components 3a, and thus reduces the risk that they might be overwhelmed by read requests (which would have had the detrimental effect of delaying or preventing the updating of primary replicas written in their memory space 5).

In certain implementations, the memory system 61 avoids performance of read transactions at first memory components 3a by assigning memory components to classes designating them either as "read components" or "update components". First memory components 3a may only be "update components", and execution of data-read requests received by the memory system does not comprise reading data that is written in update components.

The memory system 61 of Fig.7 further comprises a freshness-evaluation unit 63 to compare the freshness of a replica that is read in the memory system 61 in response to a data-read request with the freshness requirement specified in the read request, and a data-refresh unit 64 to execute a data-refresh transaction when the comparison made by the freshness-evaluation unit 63 indicates that the freshness of the read replica does not satisfy the freshness requirement of the read request.

Figure 8 is a diagram representing an example data-refresh unit 64 that may be used in the memory system 61 of Fig.7. The data refresh unit 64 of Fig.8 comprises an interrogation unit 66 to request the update-synchronization manager 18 to provide update instructions to increase the freshness of the replica read in response to the read request.

The present disclosure is not limited having regard to the location of the units that check freshness of read data and perform data refresh transactions. However, time savings may be obtained, and the architecture is simplified, in memory systems in which the second memory components 3b include elements to check the freshness of the data read from their memory spaces, and to refresh that data as desired.

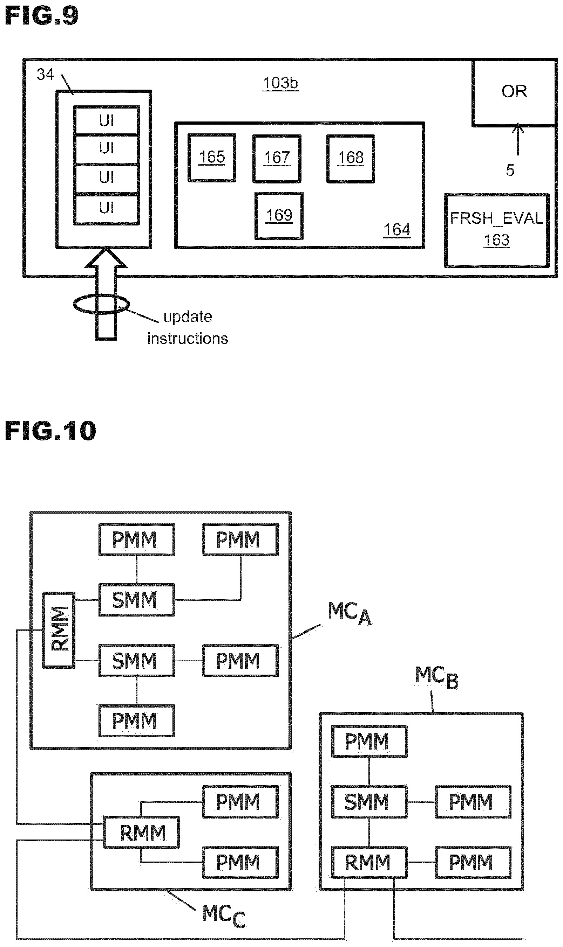

Figure 9 is a diagram representing an example second memory component 103b that corresponds to the example second memory component 3b' of Fig.4(b) but also comprises elements to check the freshness of data read from its own memory space 5 and to perform data-refresh transactions.

Second memory component 103b of Fig.9 comprises a queueing unit 34 a freshness-evaluation unit 163 and a data-refresh unit 164. The freshness-evaluation unit 163 operates to compare the freshness of a replica OR read from the memory space 5 of this second memory component 103b against the desired freshness specified in the corresponding data-read request. If the replica OR possesses the desired freshness then the read data may be supplied (via any required routing over the network 12) to the processing node EXT which made the data-read request. If the replica OR has not been updated sufficiently recently to meet the specified freshness requirement, then the data-refresh unit 164 is prompted to perform a data-refresh transaction.

According to this example, the data-refresh unit 164 comprises a queue-checking unit 165 to check whether the queue generated by the queuing unit 34 of this second memory component 103b comprises as-yet-unimplemented update instructions that would increase the freshness of a replica OR read from the memory space 5 of this second memory component 103b in response to a read request. The queue-checking unit 165 selects freshness-increasing update instructions from the queue. The selected update instructions may be all the update instructions relating to the replica of interest that are in the queue, or may be a sub-set of these, for example, only the update instructions relating to updates which bring the replica up to (and not beyond) the desired degree of freshness specified in the data-read request.

The data-refresh unit 164 further includes a selected-instruction-application unit 167 to apply to the replica OR the update instructions that have been selected from the queue by the queue-checking unit 165.

The second memory component 103b may further include an updated-freshness evaluation unit 168 to compare the freshness of a replica read in response to a read request and updated through application of update instructions by the instruction-application unit 167 against the freshness requirement specified in the read request.

The data-refresh unit 164 may further comprise an interrogation unit 169 to request the update-synchronization manager 18 to provide update instructions to increase the freshness of the replica read in response to the read request (in the event that the result of the comparison made by the updated-freshness-evaluation unit 168 shows that the replica OR still is insufficiently fresh even after application of relevant updates that had been pending in the local queue).

The present disclosure is not limited having regard to the structure of the memory components 3 and, specifically covers the case of memory components that comprise plural memory modules. Fig.10 illustrates an example of a portion of a memory system according to the present disclosure, comprising memory components that comprise plural memory modules and, in this example, the memory modules within a memory component may have different functions.

In the example of Fig.10, three memory components are shown MC_{A} to MC_{C}. The memory component MC_{A} includes two memory modules that have a switching function (SMM) and a memory module that has a router-type function (RMM), as well as four memory modules that function primarily to hold data (plain memory modules, PMM). The memory component MC_{B} includes one switch-type memory module SMM, one router-type memory module RMM and three plain memory modules PMM. The memory component MC_{C} includes a router-type memory module RMM and plain memory modules PMM.

In the example of Fig.10 each memory component may fulfil a role similar to that of a sub-net of an IP network and the router-type modules (RMM) may handle routing of memory-addressing requests and associated messages over the network of interconnected memory components. It will be understood that in a case of this kind the memory system is partitioned and, for example, each memory component may constitute a separate partition.

An example data replication method that may be applied in a memory fabric according to examples of the present disclosure will now be described. This example data replication method applies certain of the features described above and also combines various other features.

According to the present detailed example, all memory components in the memory fabric are classified into two different types: (1) read-only, or (2) update. Read only transactions are run only at read-only components, while update transactions are run only at update components. In the description that follows it is assumed that switch or router memory modules in the memory components control performance of the various described functions.

Update transactions consist of at least one write operation into a location of the memory fabric (the number of affected memory locations depends on the manner in which the data making up the data object is distributed over the memory fabric). Update transactions are performed on primary replicas of data objects. The changes of update transactions that occur at update components are serialised and logged in a global log. These changes are continuously broadcasted to all read-only components in the memory fabric and are queued in the local propagation queues of the read-only components: these local queues have the same structure as the global log.

According to the present example there are four types of transactions: update, read-only, propagation, and refresh transactions. An update transaction T may update an object "a" if T is initiated at the primary replica of "a". T, however, may read any object replica in the fabric (update and read only components).

Upon updating a memory location with a unicast addressing request on the memory fabric, a memory router/switch controlling that memory entry triggers the updating of the other replicas of the relevant data object by relaying a similar request to update one or more other memory locations (depending on a "desired number of replicas" parameter that is included in the update request).

The present example is not limited having regard to how the memory locations for the other replicas are selected. As one example, if the memory fabric is partitioned into zones having different availability (e.g. latency) and these zones have the same size and architecture, then the other replicas may be held at memory locations whose relative location within their respective partitions is the same as the relative position within its partition of the memory location holding the primary replica. In that case the relayed update request then updates the equivalent memory location in the other availability zones.

Read-only transactions in turn may be initiated at any read-only memory switch/router. Their read operations may run at different read-only routers. This is an important generalisation and allows for arbitrary physical data organisations at the read-only routing of read-only operations.

Propagation transactions are performed during the idle time of a memory router in order to propagate the changes present in the local propagation queues to the secondary replicas of a data object. Therefore, propagation transactions are continuously scheduled as long as there is no running read or refresh transaction.

By virtue of this protocol, the propagation transactions for the same object are initiated from the same primary memory router. (In certain implementations each router may batch updates of different memory locations under its control.) As a result, at secondary routers all synchronizing updates of replicas of the same object are ordered by the order of the primary transactions that performed the corresponding updates on the primary replica at the primary router of the object.

Finally, in this example there are refresh transactions that bring the secondary copies at read-only memory routers to the freshness level specified by a read-only transaction. A refresh transaction aggregates one or several propagation transactions into a single bulk transaction. A refresh transaction is processed when a read-only transaction requests a version that is younger than the version actually stored at the read-only memory router. Upon a refresh transaction, the memory router first checks the local propagation queue to see whether all write operations up to the required timestamp are already there. If yes, it fetches these write operations from the local propagation queue and applies them to the appropriate memory locations of the read-only memory router, in a single bulk transaction. Otherwise, it may retrieve whatever i s available in the local propagation queue and communicate with the global log for the remaining part.

To ensure correct executions at read-only memory routers, each read-only transaction determines a version of the objects it reads at its start. In an implementation were the memory fabric is built on non-volatile memory components that provide persistent storage, old versions are stored in the fabric and the router just keeps track of the series of sequence numbers and where in the fabric that version has been stored. On the other hand, for space saving purposes, the router may overwrite the data stored in the current location and not make use of sequence numbers.

Although the present document describes various implementations of example methods, systems and components implementing data replication protocols, it will be understood that the present disclosure is not limited by reference to the details of the specific implementations and that, in fact, variations and adaptations may be made within the scope of the appended claims.

For example, features of the various example methods, systems and components may be combined with one another in substantially any combinations and sub-combinations.

Furthermore, in FIG. 1 and other Figures described herein, different numbers of components, modules, or entities than depicted may be used. Additionally, individual functions that are described as being performed by multiple different entities may be performed by a single entity and, likewise, functions that are described as being performed by a single entity may be distributed between plural entities (of the same or different types).

In the present document, use of the bare expressions "component", "module", and "unit" to designate different entities should not be taken to signify any particular hierarchy among the designated entities.

## Claims

1. A memory system (1, 11) comprising a network (2, 12) of logically-connected memory components (3) each comprising an individual memory-address space (5), wherein:
the memory-address spaces (5) of the individual memory components (3) are aggregated and exposed as a single memory component (1') to components external to the memory system (1, 11) seeking to write or read data objects in the memory system (1, 11); and
the memory system (1, 11) is configured to implement a lazy data replication protocol to hold plural replicas of data objects in the memory system; **characterized by** the memory system (1, 11) comprising:
a receiving module (13) to receive requests to update data objects in the memory system; and
an update-synchronization manager (18);
wherein the memory system (1, 11) is configured to implement a data-replication protocol in which:
for data objects written to the memory system (1, 11), a primary replica of the respective data object is written in a first memory component (3a) and each of a selected number of other replicas of said data object is written in a respective second memory component (3b); and
responsive to an update request to update a data object held in the memory system (1, 11):
- the first memory component (3a) updates the primary replica of said data object and notifies the update-synchronization manager (18) that the respective update of said data object has been implemented on the primary replica,
- the update-synchronization manager (18) transmits, to the second memory component(s) (3b) of said memory system (1, 11), update instructions indicative of respective updates that have been implemented on the primary replica, the transmitted update instructions being ordered according to the order of implementation of the respective updates on the primary replica; and
- responsive to reception of update instructions, the second memory components (3b) update the respective other replicas of the data object in the same order that updates are implemented on the primary replica.

2. The memory system (1, 11) according to claim 1, wherein the or each second memory component (3b) comprises a queueing unit (34) to form a queue of the update instructions (35) received from the update-synchronization manager (18), the update instructions being ordered in said queue (35) in the order of implementation of the corresponding update on the primary replica.

3. The memory system (1, 11) according to claim 2, wherein:
the update-synchronization manager (18) comprises:
a list generator (40) to list notifications of updates of a primary replica in the order of implementation of the updates on that primary replica and
a transmission unit (42) to transmit update instructions according to the order of said list; and
each second memory component (3b) comprises a queueing unit (34) to order received update instructions in said queue according to the order of reception of said update instructions from the update-synchronisation manager (18).

4. The memory system (1, 11) according to claim 3, wherein the transmission unit (42) of the update-synchronization manager (18) comprises a broadcast unit (45) to broadcast update instructions to the second memory components (3b) of the memory system (1,11).

5. The memory system (61) according to claim 2, comprising:
a receiving module (62) to receive data-read requests, wherein received data-read requests specify a freshness-requirement for a respective data-object to be read;
a freshness-evaluation unit (63) to compare the freshness of a replica read in response to a read request with the freshness requirement specified in said read request; and
a data-refresh unit (64) to execute a data-refresh transaction when the comparison made by the freshness-evaluation unit indicates that the freshness of the read replica does not satisfy the freshness requirement of the read request.

6. The memory system (61) according to claim 5, wherein the data-refresh unit (64) comprises an interrogation unit (66) to request the update-synchronization manager (18) to provide update instructions to increase the freshness of the replica read in response to said read request.

7. The memory system according to claim 5, wherein the, or each, second memory component (103b) comprises an instance of said freshness-evaluation unit (163) and data-refresh unit (164), and the data-refresh unit (164) of the, or each, second memory component (103b) comprises:
a queue-checking unit (165) to check whether the queue generated by the queuing unit of said second memory component (103b) comprises update instructions to increase the freshness of a replica held in said second memory component (103b) and read in response to said read request and to select freshness-increasing update instructions from the queue, and
a selected-instruction-application unit (167) to apply update instructions selected from said queue by the queue-checking unit (165) to said replica held in the second memory component (103b).

8. The memory system according to claim 7, wherein:
the, or each, second memory component comprises an updated-freshness evaluation unit (168) to compare the freshness of a replica read in response to a read request and updated through application of update instructions by the instruction-application unit with the freshness requirement specified in said read request; and
the data-refresh unit (164) of the, or each, second memory component comprises an interrogation unit (169) responsive to the result of the comparison made by the updated-freshness-evaluation unit (168) to request the update-synchronization manager (18) to provide update instructions to increase the freshness of the replica read in response to said read request.

9. The memory system according to claim 5, wherein the, or each, second memory component comprises a queued-instruction-application unit to apply update instructions from said queue, in order, to replicas held in said second memory component during idle times when no read or refresh transaction is being implemented in said second memory component.

10. The memory system according to claim 1, wherein memory components of said memory system are assigned to one class selected in the group consisting of update components and read components, first memory components are update components, and execution of data-read requests received by the memory system does not comprise reading data that is written in update components.

11. A method of performing data replication in a memory system that holds replicated data objects in n replicas, one of said n replicas of a data object being a primary replica, the other replicas of the same data object being secondary replicas, where n is a positive integer equal to or greater than 2 and n need not be the same for different data objects, and the memory system comprises a plurality of logically-connected memory components modules, the method comprising:
receiving (S101) requests to update respective data objects,
implementing updates (S102) of data objects first on the respective primary replica,
responsive to completion of updating of primary replicas, transmitting (S103) respective update notifications to a update-synchronization manager (18) of the memory system,
logging (S104) in a list, by the update-synchronization manager, update instructions indicative of updates implemented on primary replicas, items of update information relating to a primary replica of a given data object being ordered in the list according to the order of implementation of the update on said primary replica,
transmitting (S105), by the update-synchronization manager, update instructions of the ordered list to memory modules of the memory system, and
implementing (S106) updates of respective secondary replicas of a data object in the same order as the updating of the primary replica of the same data object, using the transmitted update instructions.

12. The data-replication method of claim 11, performed in a partitioned memory system, wherein replicas of a same data object are held in the memory systems at equivalent memory locations of plural partitions.

## Patentansprüche

1. Speichersystem (1, 11), ein Netzwerk (2, 12) aus logisch verbundenen Speicherkomponenten (3) umfassend, die jeweils einen eigenen Speicheradressraum (5) umfassen, wobei:
die Speicheradressräume (5) der einzelnen Speicherkomponenten (3) aggregiert und gegenüber dem Speichersystem (1, 11) externen Komponenten, die Datenobjekte in das Speichersystem (1, 11) schreiben oder aus ihm lesen möchten, als eine einzige Speicherkomponente (1') sichtbar gemacht werden; und
das Speichersystem (1, 11) dazu konfiguriert ist, ein Lazy-Datenreplizierungsprotokoll zu implementieren, um mehrere Replikate von Datenobjekten in dem Speichersystem vorzuhalten; **dadurch gekennzeichnet, dass** das Speichersystem (1, 11) Folgendes umfasst:
ein empfangendes Modul (13) zum Empfangen von Anforderungen, die Datenobjekte in dem Speichersystem zu aktualisieren; und
einen Aktualisierungssynchronisierungsmanager (18);
wobei das Speichersystem (1, 11) dazu konfiguriert ist, ein Datenreplizierungsprotokoll zu implementieren, bei dem:
bei in das Speichersystem (1, 11) geschriebenen Datenobjekten ein primäres Replikat des jeweiligen Datenobjekts in eine erste Speicherkomponente (3a) geschrieben wird, und ein jedes Replikat aus einer ausgewählten Menge anderer Replikate des Datenobjekts in eine jeweilige zweite Speicherkomponente (3b) geschrieben wird; und
als Reaktion auf eine Aktualisierungsanforderung, ein in dem Speichersystem (1, 11) vorgehaltenes Datenobjekt zu aktualisieren:
- die erste Speicherkomponente (3a) das primäre Replikat des Datenobjekts aktualisiert und den Aktualisierungssynchronisierungsmanager (18) benachrichtigt, dass die jeweilige Aktualisierung des Datenobjekts auf dem primären Replikat implementiert wurde,
- der Aktualisierungssynchronisierungsmanager (18) an die zweite(n) Speicherkomponente(n) (3b) des Speichersystems (1, 11) Aktualisierungsanweisungen überträgt, die die jeweiligen auf dem primären Replikat implementierten Aktualisierungen angeben, wobei die übertragenen Aktualisierungsanweisungen gemäß der Reihenfolge der Implementierung der jeweiligen Aktualisierungen auf dem primären Replikat geordnet sind; und
- als Reaktion auf den Empfang von Aktualisierungsanweisungen die zweite Speicherkomponente (3b) die jeweiligen anderen Replikate des Datenobjekts in der gleichen Reihenfolge aktualisiert, in der Aktualisierungen auf dem primären Replikat implementiert wurden.

2. Speichersystem (1, 11) nach Anspruch 1, wobei die oder eine jede der zweiten Speicherkomponenten (3b) eine Warteeinheit (34) umfasst, um eine Warteschlange aus von dem Aktualisierungssynchronisierungsmanager (18) empfangenen Aktualisierungsanweisungen (35) zu bilden, wobei die Aktualisierungsanweisungen in der Warteschlange (35) in der Reihenfolge der Implementierung der entsprechenden Aktualisierung auf dem primären Replikat geordnet sind.

3. Speichersystem (1, 11) nach Anspruch 2, wobei: der Aktualisierungssynchronisierungsmanager (18) Folgendes umfasst:
einen Listengenerator (40) zum Auflisten von Benachrichtigungen über Aktualisierungen eines primären Replikats in der Reihenfolge der Implementierung der Aktualisierungen auf dem primären Replikat und
eine Übertragungseinheit (42) zum Übertragen von Aktualisierungsanweisungen gemäß der Reihenfolge in der Liste; und
eine jede zweite Speicherkomponente (3b) eine Warteeinheit (34) zum Ordnen empfangener Aktualisierungsanweisungen in der Warteschlange gemäß der Reihenfolge des Empfangs der Aktualisierungsanweisungen von dem Aktualisierungssynchronisierungsmanager (18) umfasst.

4. Speichersystem (1, 11) nach Anspruch 3, wobei die Übertragungseinheit (42) des Aktualisierungssynchronisierungsmanagers (18) eine Broadcast-Einheit (45) zum Broadcasten von Aktualisierungsanweisungen an die zweiten Speicherkomponenten (3b) des Speichersystems (1, 11) umfasst.

5. Speichersystem (61) nach Anspruch 2, Folgendes umfassend:
ein empfangendes Modul (62) zum Empfangen von Datenleseanforderungen, wobei empfangene Datenleseanforderungen ein Aktualitätserfordernis für ein jeweiliges zu lesendes Datenobjekt angeben;
eine Aktualitätsbewertungseinheit (63) zum Vergleichen der Aktualität eines als Reaktion auf eine Leseanforderung gelesenen Replikats mit dem in der Leseanforderung angegebenen Aktualitätserfordernis; und
eine Datenaktualisierungseinheit (64) zum Ausführen einer Datenaktualisierungstransaktion, wenn der von der Aktualitätsbewertungseinheit durchgeführte Vergleich zeigt, dass die Aktualität des gelesenen Replikats das Aktualitätserfordernis der Leseanforderung nicht erfüllt.

6. Speichersystem (61) nach Anspruch 5, wobei die Datenaktualisierungseinheit (64) eine Abfrageeinheit (66) umfasst, um bei dem Aktualisierungssynchronisierungsmanager (18) die Bereitstellung von Aktualisierungsanweisungen zur Erhöhung der Aktualität des als Reaktion auf die Leseanforderung gelesenen Replikats anzufordern.

7. Speichersystem nach Anspruch 5, wobei die oder eine jede der zweiten Speicherkomponenten (103b) eine Instanz der Aktualitätsbewertungseinheit (163) und der Datenaktualisierungseinheit (164) umfasst und die Datenaktualisierungseinheit (164) der oder einer jeden der zweiten Speicherkomponenten (103b) Folgendes umfasst:
eine Warteschlangenprüfeinheit (165) zum Prüfen, ob die von der Warteeinheit der zweiten Speicherkomponente (103b) erzeugte Warteschlange Aktualisierungsanweisungen zur Erhöhung der Aktualität eines in der zweiten Speicherkomponente (103b) vorgehaltenen und als Reaktion auf die Leseanforderung gelesenen Replikats umfasst, und zum Auswählen aktualitätserhöhender Aktualisierungsanweisungen aus der Warteschlange, und
eine Anwendungseinheit (167) für ausgewählte Anweisungen zum Anwenden von durch die Warteschlangenprüfeinheit (165) aus der Warteschlange ausgewählten Aktualisierungsanweisungen auf das in der zweiten Speicherkomponente (103b) vorgehaltene Replikat.

8. Speichersystem nach Anspruch 7, wobei:
die oder eine jede der zweiten Speicherkomponenten eine Bewertungseinheit (168) aktualisierter Aktualität umfasst, um die Aktualität eines als Reaktion auf eine Leseanforderung gelesenen und mittels der Anwendung von Aktualisierungsanweisungen durch die Anwendungseinheit für Anweisungen aktualisierten Replikats mit dem in der Leseanforderung angegebenen Aktualitätserfordernis zu vergleichen; und
die Datenaktualisierungseinheit (164) der oder einer jeden der zweiten Speicherkomponenten eine Abfrageeinheit (169) umfasst, die als Reaktion auf das Ergebnis des von der Bewertungseinheit (168) aktualisierter Aktualität durchgeführten Vergleichs bei dem Aktualisierungssynchronisierungsmanager (18) die Bereitstellung von Aktualisierungsanweisungen zur Erhöhung der Aktualität des als Reaktion auf die Leseanforderung gelesenen Replikats anfordert.

9. Speichersystem nach Anspruch 5, wobei die oder eine jede der zweiten Speicherkomponenten eine Anwendungseinheit für in der Warteschlange befindliche Anweisungen umfasst, um in Leerlaufzeiten, in denen in der zweiten Speicherkomponente keine Lese- oder Aktualisierungstransaktion implementiert wird, der Reihe nach Aktualisierungsanweisungen aus der Warteschlange auf in der zweiten Speicherkomponente vorgehaltene Replikate anzuwenden.

10. Speichersystem nach Anspruch 1, wobei Speicherkomponenten des Speichersystems einer Klasse zugewiesen werden, die aus der aus Aktualisierungskomponenten und Lesekomponenten bestehenden Gruppe ausgewählt wurde, erste Speicherkomponenten Aktualisierungskomponenten sind und die Ausführung von durch das Speichersystem empfangenen Datenleseanforderungen nicht das Lesen von in die Aktualisierungskomponenten geschriebenen Daten umfasst.

11. Verfahren zur Durchführung von Datenreplizierung in einem Speichersystem, das in n Replikaten replizierte Datenobjekte vorhält, wobei eines der n Replikate eines Datenobjekts ein primäres Replikat ist, die anderen Replikate desselben Datenobjekts sekundäre Replikate sind, wobei n eine positive ganze Zahl gleich oder größer 2 ist und n bei verschiedenen Datenobjekten nicht gleich sein muss und das Speichersystem mehrere logisch verbundene Speicherkomponentenmodule umfasst, wobei das Verfahren Folgendes umfasst:
Empfangen (S101) von Anforderungen, jeweilige Datenobjekte zu aktualisieren,
Implementieren von Aktualisierungen (S102) von Datenobjekten zuerst auf den jeweiligen primären Replikaten,
als Reaktion auf den Abschluss der Aktualisierung der primären Replikate Übertragen (S103) jeweiliger Aktualisierungsnachrichten an den Aktualisierungssynchronisierungsmanager (18) des Speichersystems,
Protokollieren (S104) von auf primären Replikaten implementierten Aktualisierungen angebenden Aktualisierungsanweisungen durch den Aktualisierungssynchronisierungsmanager in einer Liste, wobei Aktualisierungsinformationen zu einem primären Replikat eines bestimmten Datenobjekts in der Liste gemäß der Reihenfolge der Implementierung der Aktualisierung auf dem primären Replikat geordnet sind,
Übertragen (S105) von Aktualisierungsanweisungen der geordneten Liste an Speichermodule des Speichersystems durch den Aktualisierungssynchronisierungsmanager, und
Implementieren (S106) von Aktualisierungen jeweiliger sekundärer Replikate eines Datenobjekts in derselben Reihenfolge wie beim Aktualisieren des primären Replikats desselben Datenobjekts unter Verwendung der übertragenen Aktualisierungsanweisungen.

12. Datenreplizierungsverfahren nach Anspruch 11, das in einem partitionierten Speichersystem durchgeführt wird, wobei Replikate eines selben Datenobjekts in dem Speichersystem an äquivalenten Speicherorten mehrerer Partitionen vorgehalten werden.

## Revendications

1. Système de mémoire (1, 11) comprenant un réseau (2, 12) de composants de mémoire connectés logiquement (3) comprenant chacun un espace d'adresses de mémoire individuel (5), dans lequel :
les espaces d'adresses de mémoire (5) des composants de mémoire individuels (3) sont agrégés et exposés en tant que composant de mémoire unique (1') à des composants externes au système de mémoire (1, 11) cherchant à écrire ou à lire des objets de données dans le système de mémoire (1, 11) ; et
le système de mémoire (1, 11) est configuré pour mettre en oeuvre un protocole de réplication de données paresseux pour contenir plusieurs duplications d'objets de données dans le système de mémoire ;
**caractérisé par** le système de mémoire (1, 11) comprenant :
un module de réception (13) pour recevoir des demandes de mise à jour d'objets de données dans le système de mémoire ; et
un gestionnaire de synchronisation de mise à jour (18) ;
le système de mémoire (1, 11) étant configuré pour mettre en oeuvre un protocole de réplication de données dans lequel :
pour des objets de données écrits dans le système de mémoire (1, 11), une duplication primaire de l'objet de données respectif est écrite dans un premier composant de mémoire (3a) et chacune d'un nombre sélectionné d'autres duplications dudit objet de données est écrite dans un second composant de mémoire respectif (3b) ; et
en réponse à une demande de mise à jour pour mettre à jour un objet de données contenu dans le système de mémoire (1, 11) :
- le premier composant de mémoire (3a) met à jour la duplication primaire dudit objet de données et informe le gestionnaire de synchronisation de mise à jour (18) que la mise à jour respective dudit objet de données a été mise en oeuvre sur la duplication primaire,
- le gestionnaire de synchronisation de mises à jour (18) transmet, au(x) second(s) composant(s) de mémoire (3b) dudit système de mémoire (1, 11), des instructions de mise à jour indiquant les mises à jour respectives mises en oeuvre sur la duplication primaire, les instructions de mise à jour transmises étant ordonnées en fonction de l'ordre de mise en oeuvre des mises à jour respectives sur la duplication primaire ; et
- en réponse à la réception d'instructions de mise à jour, les seconds composants de mémoire (3b) mettent à jour les autres duplications respectives de l'objet de données dans le même ordre que celui où les mises à jour sont mises en oeuvre sur la duplication primaire.

2. Système de mémoire (1, 11) selon la revendication 1, dans lequel le ou chaque second composant de mémoire (3b) comprend une unité de mise en file d'attente (34) pour former une file d'attente des instructions de mise à jour (35) reçues du gestionnaire de synchronisation de mise à jour (18), les instructions de mise à jour étant ordonnées dans ladite file d'attente (35) dans l'ordre de mise en oeuvre de la mise à jour correspondante sur la duplication primaire.

3. Système de mémoire (1, 11) selon la revendication 2, dans lequel :
le gestionnaire de synchronisation de mise à jour (18) comprend :
un générateur de liste (40) pour lister les notifications de mises à jour d'une duplication primaire dans l'ordre de mise en oeuvre des mises à jour sur cette duplication primaire et
une unité de transmission (42) pour transmettre des instructions de mise à jour selon l'ordre de ladite liste ; et
chaque second composant de mémoire (3b) comprend une unité de mise en file d'attente (34) pour ordonner des instructions de mise à jour reçues dans ladite file d'attente en fonction de l'ordre de réception desdites instructions de mise à jour en provenance du gestionnaire de synchronisation de mise à jour (18).

4. Système de mémoire (1, 11) selon la revendication 3, dans lequel l'unité de transmission (42) du gestionnaire de synchronisation de mise à jour (18) comprend une unité de diffusion (45) pour diffuser des instructions de mise à jour aux seconds composants de mémoire (3b) du système de mémoire (1, 11).

5. Système de mémoire (61) selon la revendication 2, comprenant :
un module de réception (62) pour recevoir des demandes de lecture de données, les demandes de lecture de données reçues spécifiant une exigence de fraîcheur pour qu'un objet de données respectif soit lu ;
une unité d'évaluation de fraîcheur (63) pour comparer la fraîcheur d'une duplication lue en réponse à une demande de lecture à l'exigence de fraîcheur spécifiée dans ladite demande de lecture ; et
une unité de rafraîchissement de données (64) pour exécuter une transaction de rafraîchissement de données lorsque la comparaison effectuée par l'unité d'évaluation de fraîcheur indique que la fraîcheur de la duplication de lecture ne satisfait pas à l'exigence de fraîcheur de la demande de lecture.

6. Système de mémoire (61) selon la revendication 5, dans lequel l'unité de rafraîchissement de données (64) comprend une unité d'interrogation (66) pour demander au gestionnaire de synchronisation de mise à jour (18) de fournir des instructions de mise à jour pour augmenter la fraîcheur de la duplication lue en réponse à ladite demande de lecture.

7. Système de mémoire selon la revendication 5, dans lequel le ou chaque second composant de mémoire (103b) comprend une instance de ladite unité d'évaluation de fraîcheur (163) et de ladite unité de rafraîchissement de données (164), et l'unité de rafraîchissement de données (164) du ou de chaque second composant de mémoire (103b) comprend :
une unité de contrôle de file d'attente (165) pour vérifier si la file d'attente générée par l'unité de mise en file d'attente dudit second composant de mémoire (103b) comprend des instructions de mise à jour pour augmenter la fraîcheur d'une duplication contenue dans ledit second composant de mémoire (103b) et lue en réponse à ladite demande de lecture et pour sélectionner des instructions de mise à jour augmentant la fraîcheur dans la file d'attente, et
une unité d'application d'instructions sélectionnées (167) pour appliquer des instructions de mise à jour sélectionnées dans ladite file d'attente par l'unité de vérification de files d'attente (165) à ladite duplication contenue dans le second composant de mémoire (103b).

8. Système de mémoire selon la revendication 7, dans lequel :
le ou chaque second composant de mémoire comprend une unité d'évaluation de fraîcheur mise à jour (168) pour comparer la fraîcheur d'une duplication lue en réponse à une demande de lecture et mise à jour par l'application d'instructions de mise à jour par l'unité d'application d'instructions avec l'exigence de fraîcheur spécifiée dans ladite demande de lecture ; et
l'unité de rafraîchissement de données (164) du ou de chaque second composant de mémoire comprend une unité d'interrogation (169) en réponse au résultat de la comparaison effectuée par l'unité d'évaluation de fraîcheur mise à jour (168) pour demander au gestionnaire de synchronisation de mise à jour (18) de fournir des instructions de mise à jour pour augmenter la fraîcheur de la duplication lue en réponse à ladite demande de lecture.

9. Système de mémoire selon la revendication 5, dans lequel le ou chaque second composant de mémoire comprend une unité d'application d'instructions en file d'attente pour appliquer des instructions de mise à jour à partir de ladite file d'attente, dans l'ordre, à des duplications contenues dans ledit second composant de mémoire pendant des temps d'inactivité lorsqu'aucune lecture ou transaction de rafraîchissement n'est en cours de mise en oeuvre dans ledit second composant de mémoire.

10. Système de mémoire selon la revendication 1, dans lequel des composants de mémoire dudit système de mémoire sont affectés à une classe sélectionnée dans le groupe constitué de composants de mise à jour et de composants de lecture, les premiers composants de mémoire sont des composants de mise à jour, et l'exécution de demandes de lecture de données reçues par le système de mémoire ne comprend pas la lecture de données écrites dans les composants de mise à jour.

11. Procédé d'exécution d'une réplication de données dans un système de mémoire contenant des objets de données dupliqués dans n duplications, l'une desdites n duplications d'un objet de données étant une duplication primaire, les autres duplications du même objet de données étant des duplications secondaires, n étant un nombre entier positif égal ou supérieur à 2 et n ne devant pas nécessairement être le même pour différents objets de données, et le système de mémoire comprend une pluralité de modules de composants de mémoire connectés logiquement, le procédé comprenant :
la réception (S101) de demandes de mise à jour d'objets de données respectifs,
la mise en oeuvre de mises à jour (S102) d'objets de données d'abord sur la duplication primaire respective,
en réponse à l'achèvement de la mise à jour de duplications primaires, la transmission (S103) de notifications de mise à jour respectives à un gestionnaire de synchronisation de mise à jour (18) du système de mémoire,
la consignation (S104), dans une liste, par le gestionnaire de synchronisation de mise à jour, d'instructions de mise à jour indicatives de mises à jour mises en oeuvre sur des duplications primaires, des éléments d'informations de mise à jour relatifs à une duplication primaire d'un objet de données donné ordonné dans la liste en fonction de l'ordre de mise en oeuvre de la mise à jour sur ladite duplication primaire,
la transmission (S105), par le gestionnaire de synchronisation de mise à jour, d'instructions de mise à jour de la liste ordonnées à des modules de mémoire du système de mémoire, et
la mise en oeuvre (S106) de mises à jour de duplications secondaires respectives d'un objet de données dans le même ordre que la mise à jour de la duplication primaire du même objet de données, à l'aide des instructions de mise à jour transmises.

12. Procédé de réplication de données selon la revendication 11, exécuté dans un système de mémoire partitionné, dans lequel des duplications d'un même objet de données sont contenues dans les systèmes de mémoire à des emplacements de mémoire équivalents de plusieurs partitions.
